# EUROPÄISCHE PATENTSCHRIFT

(11) **EP 2 097 792 B1**
(45) Veröffentlichungstag und Bekanntmachung des Hinweises auf die Patenterteilung: **31.05.2017**
(21) Anmeldenummer: 07846331.2
(22) Anmeldetag: 08.11.2007
(51) Int. Cl.: G03H 1/20, B42D 25/328, G06K 7/10

(54) **HERSTELLUNGSVERFAHREN FÜR EIN HOLOGRAFISCHES SICHERHEITSELEMENT**
PRODUCTION METHOD FOR A HOLOGRAPHIC SECURITY ELEMENT
PROCÉDÉ DE PRODUCTION D'UN ÉLÉMENT DE SÉCURITÉ HOLOGRAPHIQUE

(30) Priorität: 30.11.2006 DE 102006057123
(43) Veröffentlichungstag der Anmeldung: 09.09.2009
(73) Patentinhaber: Bundesdruckerei GmbH, 10958 Berlin (DE)
(72) Erfinder: LEOPOLD, André, 10119 Berlin (DE); KUNATH, Christian, 12203 Berlin (DE); PAESCHKE, Manfred, 16352 Basdorf (DE)
(74) Vertreter: Jungblut, Bernhard Jakob
(86) Internationale Anmeldenummer: PCT/DE2007/002054
(87) Internationale Veröffentlichungsnummer: WO 2008/064643

(56) Entgegenhaltungen:
- EP-A- 0 828 203
- WO-A-2005/008345

## Beschreibung

Die Erfindung betrifft ein Verfahren zur Herstellung eines holographischen Sicherheitselementes mit einem Holographic Recordable Film, in welchem ein flächiges erstes Muster in Form eines ersten Hologramms sowie ein Barcode als ein zweites Muster gebildet ist.

Hintergrund der Erfindung und Stand der Technik.

Sicherheitselemente dienen dazu, ein Sicherheits- und/oder Wertdokument gegen Fälschung oder Kopieren zu sichern. In Sicherheitselementen sind oftmals auch individualisierende Angaben, beispielsweise Seriennummer, Ausweisnummer, biometrische Daten, etc., enthalten. Diese können in Klarschrift bzw. Bildform oder optisch codiert bzw. maschinenlesbar vorgesehen sein. In letzterem Falle sind beispielsweise die sogenannten Barcodes als mit hoher -Zuverlässigkeit maschinenlesbar bewährt.

Das grundsätzliche Vorgehen bei der Herstellung von Hologrammen ist beispielsweise in der Literaturstelle EP 0 896 260 A2 beschrieben. Die Grundzüge werden folgend kurz erläutert. Zunächst wird ein Holographie-Master mit einem Masterhologramm hergestellt. Dann wird der Holographie-Master hinter einen Holographic Recordable Film positioniert, beispielsweise in flächigem Kontakt. Kohärentes Licht, beispielsweise aus einem Laser, wird auf die dem Holographie-Master abgewandte Seite des Holographic Recordable Films eingestrahlt, typischerweise mit definierter Wellenlänge und definiertem Inzidenzwinkel, nach Maßgabe des vom Holographie-Master zu rekonstruierenden holographischen Musters. Es durchdringt den Holographic Recordable Film und wird vom Master gebeugt bzw. reflektiert, wobei sich das Hologramm durch Interferenz mit dem einfallenden Licht rekonstruiert und das Hologramm in dem Holographic Recordable Film abbildet und speichert durch photochemische Prozesse im Holographic Recordable Film.

Aus der Literaturstelle US 2005/0188576 A1 sind Barcodes in Ausbildung als Hologramme bekannt.

Aus der WO 2005/008345 A2 sind Verfahren zum Berechnen und Erzeugen computergenerierter Hologramme bekannt. Die computergenerierten Hologramme können auch Barcodes enthalten.

Aus der EP 0 828 203 A2 sind mehrfarbige Hologramme bekannt, die durch nacheinanderfolgende Belichtung mit verschiedenfarbigem Licht durch entsprechend vorbereitete Masken erzeugt werden.

Die überlappende Kombination von holographischen Mustern bzw. Bildern mit anderen Mustern, holographisch oder nicht-holographisch, erfolgt typischerweise durch subsequente Herstellung der betreffenden Muster in verschiedenen Trägerschichten und anschließender Übereinanderstapelung. Dies ist aufwändig und langsam.

Technisches Problem der Erfindung.

Der Erfindung liegt daher das technische Problem zu Grunde, ein Verfahren zur Herstellung eines Sicherheitselementes mit einem holographischen ersten Muster anzugeben, welches auch ein zweites Muster trägt, wobei das Verfahren schnell und einfach durchführbar ist.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für erstes ist ein auf ein Sicherheits und/oder Wertdokument aufklebbares Visum. Ein Beispiel für letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Im Rahmen der vorliegenden Anmeldung enthalten Sicherheitsmerkmale das erste und das zweite Muster bzw. werden hierdurch gebildet.

Ein Muster besteht typischerweise aus einer Vielzahl nebeneinander angeordneter Müstereinheiten bzw. Pixel. Die Mustereinheiten bzw. Pixel eines Musters sind einander zugeordnet und in definierter Weise lateral zueinander angeordnet, typischerweise in zwei Raumdimensionen und ergeben in der Gesamtbetrachtung eine Darstellung, beispielsweise ein Bild, Symbol, Logo, Schriftzug (Buchstaben, Zahlen, alphanumerisch), oder Code (z.B. Barcode).

Ein (erstes) Muster weist im Rahmen der Erfindung in Teilbereichen bzw. Teilflächen Fehlstellen auf, die das (erste) Muster unterbrechen, ohne dass dadurch dessen Eignung als Muster gemindert wird. Die Fehlstellen können im Rahmen der Erfindung ihrerseits ein zweites Muster bilden, welches von dem ersten Muster verschieden ist. Dabei ist den Fehlstellen ein erster digitaler Zustand und Bereichen zwischen den Fehlstellen, den Nicht-Fehlstellen, bezogen auf das erste Muster, ein zweiter digitaler Zustand zugeordnet. Insofern überlappen sich das erste Muster und das zweite Muster in Bereichen der Nicht-Fehlstellen, da diese Bereiche für das zweite Muster einen digitalen Zustand definieren und ansonsten Bestandteil des ersten Musters sind. Die Fehlstellen des zweiten Musters können wiederum in Musterbereiche bzw. Pixel unterteilt sein.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Barcode ist eine typischerweise flächige Musterstruktur, deren Muster für eine Zeichenfolge codiert. Man unterscheidet im wesentlichen eindimensionale Barcodes und zweidimensionale Barcodes. Zu den eindimensionalen bzw. linearen Barcodes zählen als Zweibreiten-Codes Code 2/5 Industrial, Code 2/5 Interleaved (ITF), Code 2/5 3 Striche Matrix, Code 39, Code 39 extended, und als Mehrbreiten-Codes Code 93, erweiterter Code 93, Code 128, EAN 8, EAN 13, UPC Version A, UPC Version E, Codabar. Die zweidimensionalen Codes unterteilen sich in Stapelcodes und Matrixcodes. Zu den Stapelcodes zählen Code 49, Code 16K, Codablock (A, F, 256), IPC-2D, Supercode, PDF 417, Micro PDF, Color Ultra Code, Ultra Code. Zu den Matrixcodes zählen Array Tag, Aztec, Code One, Code (S), CP Code, Data Matrix, DataStrip, Dot Code A, MaxiCode, QR Code, MiniCode, SmartCode, Snowflake Code, AccuCode (3-DI), Vericode. Eine Kombination eines Linear- und Stapelcodes ist RSS-14.

Ein Barcode-Element ist ein Teilbereich eines Barcodes, der in dem Codierungssystem des Barcodes für ein einziges Zeichen codiert. Ein Barcode-Element wird auch als Balken oder Pixel bezeichnet, letzteres im Falle von zweidimensionalen Barcodes. Typischerweise sind Barcodes im binären Zahlensystem codiert und dann codiert ein Barcode-Element entweder für "0" oder für "1", indem es entweder aktiviert oder deaktiviert ist. Im Rahmen der Erfindung sind einem Zustand eine Fehlstelle des zweiten Musters und dem anderen Zustand die Abwesenheit einer Fehlstelle zugeordnet. Entsprechend dem jeweiligen Barcode wird aus einer Folge von verschiedenen Barcode-Elementen eine zunächst binäre Zeichenfolge gebildet, die dann in andere Zeichenfolgen, beispielsweise eine alphanumerische Zeichenfolge, transformiert werden kann.

Ein Hologramm umfasst beispielsweise eine Fläche bzw. einen flächigen Bereich, worin mikroskopische bzw. mit dem menschlichen Auge nicht erkennbare Oberflächenstrukturen eingerichtet sind. Im Falle von sogenannten Volumenhologrammen wird das Lichtinterferenzmuster durch Variation des Brechungsindex oder der Absorption innerhalb des Volumen des holographischen Materials gespeichert. Ein Hologramm zeigt auf Grund dieser Oberflächenstrukturen bei Betrachtung unter verschiedenen Auslesewinkelbereichen verschiedene Bilder bzw. optische Merkmale oder optische Muster bzw. Farben. Die Verschiedenheit kann dabei die Bilder bzw. Muster betreffen oder auch nur beispielsweise Farbe oder Helligkeit. Dabei kann die optische Variabilität auch von dem Inzidenzwinkelbereich einer Beleuchtung und/oder deren Farbe abhängen.

Als definierter Auslesewinkelbereich ist ein Raumwinkel um einen Ursprungsvektor in einem Polarkoordinatensystem, i.e. Breitenwinkel und Meridianwinkel, bezeichnet, aus welchem eine Betrachtung des Koordinatenursprungs erfolgt bzw. erfolgen soll für eine sichere Erkennung des Barcodes. Dabei ist jeweils ein betrachtetes Barcode-Element der Koordinatenursprung. Der Raumwinkel kann kleiner als π/2, vorzugsweise kleiner als π/4, weiterhin vorzugsweise kleiner als π/8, höchstvorzugsweise kleiner als π/16, sein.

Als definierter Inzidenzwinkelbereich ist ein Raumwinkel um einen Ursprungsvektor in einem Polarkoordinatensystem, i.e. Breitenwinkel und Meridianwinkel bezeichnet, aus welchem eine Beleuchtung des Koordinatenursprungs erfolgt bzw. erfolgen soll für eine sichere Erkennung des Barcodes. Dabei ist jeweils ein Barcode-Element der Koordinatenursprung. Der Raumwinkel kann kleiner als π/2, vorzugsweise kleiner als π/4, weiterhin vorzugsweise kleiner als π/8, höchstvorzugsweise kleiner als π/16, sein.

Ein Spatial Light Modulator erlaubt eine zweidimensional ortsaufgelöste Beleuchtung bzw. Bestrahlung eines meist flächigen Gegenstandes mit modulierter Intensität. Hierbei kann es sich beispielsweise um einem DMD (Digital Micromirror Device) Chip, LCD (Liquid Crystal Display) Transmissiondisplays, LCOS (Liquid Crystal on Silicon) Display handeln. Allen ist gemeinsam, dass das Display aus einer Vielzahl von Pixeln gebildet ist, wobei jedes Pixel unabhängig von anderen Pixeln aktivierbar oder deaktivierbar ist (auch Zwischenstufen sind möglich), wodurch durch entsprechende Ansteuerung der Pixel sich Muster oder Bilder projizieren lassen. Durch die freie Ansteuerbarkeit können auch ohne Weiteres verschiedene Bilder oder Muster in zeitlicher Folge hintereinander generiert werden, beispielsweise in Form individualisierender Barcodes für verschiedene Sicherheitselemente.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises. Ein für eine Gruppe von Geldscheinen innerhalb der Gesamtmenge der Geldscheine individualisierender Code ist die Wertigkeit. Für einen Geldschein individualisierend ist die Seriennummer.

Beispiele für nicht individualisierende Codes bzw. Muster sind Wappen, Siegel, Hoheitszeichen, etc.

Ein Holographic Recordable Film wird im Rahmen der Erfindung typischerweise mittels eines Photopolymers gebildet. Beispiele für geeignete Photopolymere sind: Photopolymere der Firma Bayer AG, wie beispielsweise Phenostor, Omnidex (DuPont), Fudan-Techsun Photopolymer, Photopolymere der Firma Nippon Paint. Die Dicke eines einsetzbaren Holographic Recordable Films liegt beispielsweise im Bereich von 0,1 bis 100 µm, vorzugsweise von 1 bis 15 µm, beispielsweise 10 µm bei einer Brechungsindexmodulation von 0,01 bis 1,0.

Grundzüge der Erfindung und bevorzugte Ausführungsformen; Zur Lösung des vorstehenden technischen Problems lehrt die Erfindung ein Verfahren zur Herstellung eines holographischen Sicherheitselementes mit einem Holographic Recordable Film, in welchem ein flächiges erstes Muster in Form eines ersten Hologramms gebildet ist, wobei in dem ersten Muster Teilbereiche gebildet sind, in welchen das erste Muster unterbrochen ist und welche einen Barcode als ein zweites und von dem ersten Muster verschiedenes Muster bilden.

Ein wesentliches Element der Erfindung ist, dass das erste Muster und das zweite Muster in einem einzigen Holographic Recordable Film gebildet sind, wodurch sich eine einfache Herstellbarkeit, beispielsweise durch zweifache Belichtung, gleichzeitig oder sequenziell, ergibt. Zudem sind die beiden Muster ineinander auch physikalisch integriert und somit praktisch untrennbar, was die Sicherheit gegen Manipulation erhöht. Ein derartiges Sicherheitselement lässt sich auf verschiedene Weisen und in diversen Varianten herstellen, wozu auf die folgenden Ausführungen verwiesen wird. Erfindungsgemäß ist das zweite Muster ein Barcode. Grundsätzlich sind alle bekannten Barcodes einsetzbar und an anderer Stelle ist eine beispielhafte Auflistung einsetzbarer Barcodes gegeben. Das zweite Muster kann insbesondere für eine individualisierende Information codieren und insofern ein individuelles Muster sein.

Das erste Muster kann grundsätzlich beliebiger Natur sein. So kann es beispielsweise ein reales Hologramm sein, welches nicht aus Pixeln zusammengesetzt ist.

Bevorzugterweise ist das erste Muster ein nichtindividuelles Muster, wie beispielsweise ein Wappen oder Hoheitszeichen.

Das erste Hologramm kann ein Winkelmultiplex- und/oder Wellenlängenmultiplex-Hologramm sein. Bei einem Winkelmultiplex-Hölogramm rekonstruiert ein im Holographic Recordable Film gespeichertes erstes Muster nur unter Bestrahlung mit einem vorgegebenen bzw. definierten Inzidenzwinkelbereich und/oder bei Betrachtung bzw. Aufnahme in einem vorgegebenen bzw. definierten Auslesewinkelbereich. Unter verschiedenen Inzidenzwinkelbereichen bzw. Auslesewinkelbereichen können verschiedene erste Muster rekonstruieren. Bei einem Wellenlängenmultiplex-Hologramm rekonstruiert ein im Holographic Recordable Film gespeichertes erstes Muster nur unter Bestrahlung und/oder Auslesung in einem vorgegebenen bzw. definierten schmalen Wellenlängenbereich (Farbe). Wellenlängenmultiplex und Winkelmultiplex können zudem miteinander kombiniert sein.

Ein derartiges Sicherheitselement kann zur Herstellung eines Sicherheits- und/oder Wertdokumentes verwendet werden, wobei das Sicherheitselement auf oder in dem Sicherheits- und/oder Wertdokument appliziert oder hierauf oder hierin gebildet wird. Eine Applikation auf einem Sicherheits- und/oder Wertdokument kann beispielsweise durch Aufkleben erfolgen. Eine Applikation in einem Sicherheits- und/oder Wertdokument kann beispielsweise durch Einlaminieren erfolgen. Eine Bildung in einem Sicherheits- und/oder Wertdokument kann beispielsweise gemäß der Literaturstelle DE 10 2004 053 367 A1 erfolgen, wobei der Holographic Recordable Film im Volumen des Substrates angeordnet ist.

Die vorliegende Patentanmeldung beschreibt verschiedener Varianten zur Herstellung derartiger Sicherheitselemente. In aller Allgemeinheit umfasst ein erfindungsgemäßes Verfahren die folgenden Verfahrensschritte: a) eine Information wird in eine Zeichenfolge transformiert, b) die Zeichenfolge aus Stufe a) wird in das zweite Muster, nämlich einen Barcode, transformiert, c) der Barcode aus Stufe b) wird in ein Modulatorsignal für einen Spatial Light Modulator transformiert, d) ein Holographic Recordable Film wird unter Zwischenschaltung eines mit dem Signal aus Stufe c) modulierten Spatial Light Modulators in Teilbereichen belichtet, wobei das zweite Muster durch belichtete Teilbereiche des Holographic Recordable Films gebildet wird, e) der belichtete Holographic Recordable Film aus Stufe d) wird der Belichtung über einen Holographie-Master unterworfen, wobei das erste Muster in Bereichen außerhalb der belichteten Teilbereiche des zweiten Musters gebildet wird.

Der Kern eines erfindungsgemäßen Verfahrens besteht also in einer Doppelbelichtung des Holographic Recordable Films, wobei durch die erste Belichtung (Stufe d) in belichteten Bereichen des Holographic Recordable Films das Photopolymer irreversibel verändert wird, i.e. für eine weitere Belichtung (Stufe e) nicht mehr photosensitiv ist. Die belichteten Bereiche der ersten Belichtung bilden somit Fehlstellen für die nachfolgende zweite Belichtung. Mit der ersten Belichtung wird folglich ein Teil des ersten Musters, nämlich die Fehlstellen, erzeugt, und mit der zweiten Belichtung wird das erste Muster in Bereichen außerhalb der Fehlstellen gebildet, wodurch auch gleichzeitig das zweite Muster mit den Nicht-Fehlstellen vervollständigt wird. Mit dem Spatial Light Modulator lassen sich für verschiedene Sicherheitselemente verschiedene zweite Muster bilden durch die Modulation.

Im einfachsten Falle erfolgt die erste Belichtung der Stufe d) mittels einer UV-Lichtquelle. Hinter dem Holographic Recordable Film kann zur Verstärkung ein einfacher Spiegel angebracht sein. Die so entstehenden Fehlstellen sind nicht-holographisch und stehen der Bildung des holographischen ersten Musters in der zweiten Belichtung der Stufe e) nicht mehr zur Verfügung.

Grundsätzlich können die erste Belichtung der Stufe d) und die zweite Belichtung der Stufe e) nacheinander oder auch zeitgleich durchgeführt werden. In letzterem Falle ist es erforderlich, dass die Lichtart und deren Intensität zur Herstellung des zweiten Musters so gewählt wird, dass die Reaktionskinetik des Holographic Recordable Films auf die Bestrahlung schneller ist als die Reaktionskinetik des Holographic Recordable Films auf die Bestrahlung zur Herstellung des ersten Musters. Insofern beziehen sich die Begriffe der ersten Belichtung und der zweiten Belichtung dann auf die Reihenfolge der Reaktionsprozesse auf die betreffenden Belichtungen. Beispielsweise kann die erste Belichtung mit UV-Licht sehr hoher Intensität und die zeitgleiche zweite Belichtung mit üblichem Laserlicht erfolgen. Je höher der Intensitätsunterschied bzw. der Unterschied der Reaktionskinetik des Holographic Recordable Film auf das jeweilige Licht ist, um so höher ist der Kontrast zwischen Fehlstellen und dem ersten Muster und folglich zwischen dem ersten Muster und dem zweiten Muster. Schließlich beschreibt die Anmeldung ein Verfahren zur Auslesung eines erfindungsgemäß hergestellten Sicherheitselementes, wobei das zweite Muster optisch erfasst und ausgewertet wird, sowie ein Gerät zur Durchführung des Verfahrens. Letzteres umfasst eine Lichtquelle zur Beleuchtung des Sicherheitselementes, welche zur Rekonstruktion des ersten Musters geeignet ist, eine ortsauflösende Kamera zur Aufnahme des Sicherheitselementes sowie eine Auswerteeinheit mit einer Software, welche durch ortsaufgelöste Detektion von durch Kontrast gebildeten Strukturen die Fehlstellen des ersten Musters und so das zweite Muster aus dem aufgenommenen ersten Muster rekonstruiert und die dadurch codierte Information decodiert und ggf. an eine angeschlossene Schnittstelle ausgibt oder auf einem angeschlossenen Display anzeigt. Bei der Kamera kann es sich um eine Farb-CCD Kamera, aber auch um eine schwarz/weiss-CCD Kamera handeln. Es versteht sich, dass der Begriff der Kamera in aller Allgemeinheit alle Technologien der zweidimensional ortsauflösenden Aufnahme von Bildern bzw. Mustern umfasst. Beispielsweise kann die Kamera eindimensional auflösend mit einer Sensorreihe arbeiten. Dann wird die zweidimensionale Ortsauflösung durch eine Relativbewegung von Sicherheitselement zur Kamera in einer Richtung, die nicht parallel, beispielsweise orthogonal, zur Sensorreihe, erzielt. Im einfachsten Fall wird jedoch eine zweidimensional auflösende Sensormatrix eingesetzt. Im Folgenden wird die Erfindung anhand von Ausführungsbeispielen näher erläutert.

### Beispiel 1: Sicherheitselement

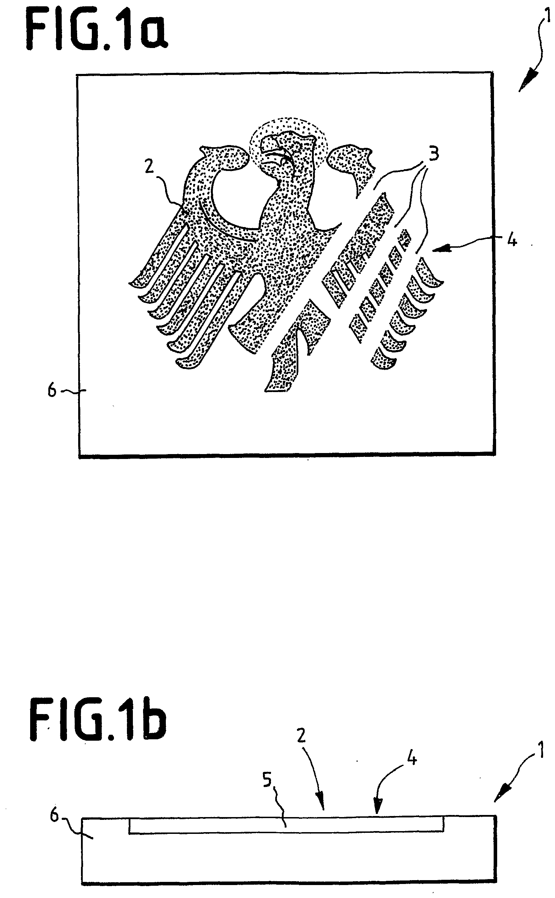

In der Figur 1a erkennt man ein Sicherheitselement 1 mit einem ersten Muster 2, beispielsweise einem Hoheitszeichen. In dem ersten Muster 2 sind Fehlstellen 3 eingerichtet, welche ihrerseits in ihrer Gesamtheit ein zweites Muster 4, erfindungsgemäß einen Barcode, bilden.

Durch vergleichende Betrachtung der Figuren 1a und 1b erkennt man, dass sowohl das erste Muster 2 als auch das zweite Muster 4 in einem Holographic Recordable Film 5 gebildet sind, welcher auf einem Substrat 6 angeordnet ist.

### Beispiel 2: Herstellung eines Sicherheitselementes mit nicht-holographischem zweiten Muster

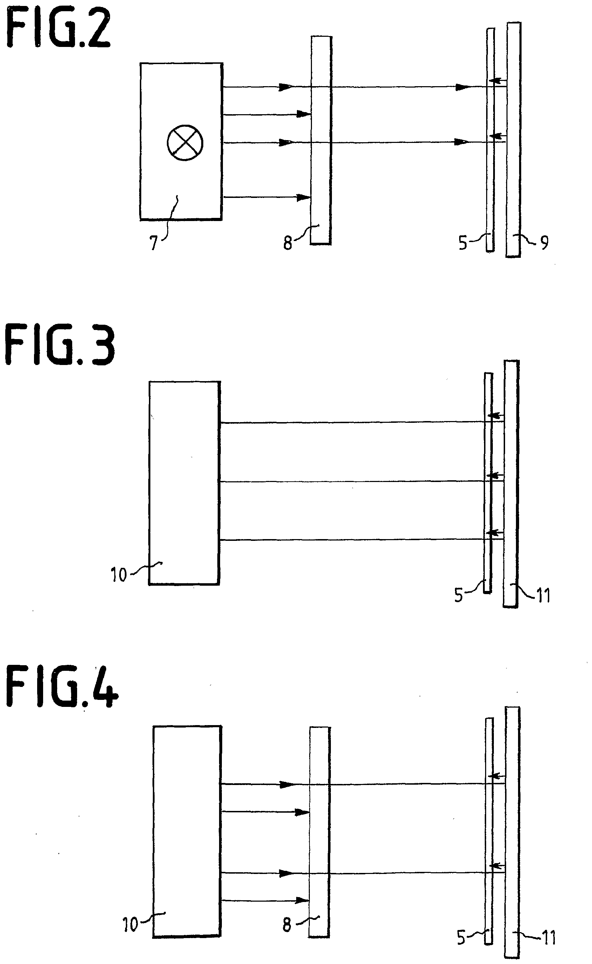

In der Figur 2 erkennt man eine UV-Lichtquelle 7, welche durch einem Spatial Light Modulator 8 auf den (zuvor unbelichteten) Holographic Recordable Film 5 strahlt. Der Spatial Light Modulator 8 ist mit einem Signal moduliert, welches bewirkt, dass Teile des Spatial Light Modulators 8 lichtdurchlässig und andere Teile nicht lichtdurchlässig sind, wodurch auf den Holographic Recordable Film 5 das zweite Muster 4, welches dem betreffenden Holographic Recordable Film 5 bzw. Sicherheitselement 1 zugeordnet ist, projiziert wird. Hinter dem Holographic Recordable Film 5 ist ein Spiegel 9 angeordnet. Die Intensität und Dauer der Belichtung mit der UV-Lichtquelle ist mit der Maßgabe gewählt, dass das Photopolymer des Holographic Recordable Films nach Abschluss der Belichtung unempfindlich für weitere Belichtungen ist, i.e. bei weiterer Belichtung keine Photoreaktionen mehr ausführt. Mit dem Abschluss der Belichtung sind belichtete Bereiche gebildet, welche die Fehlstellen im fertigen Sicherheitselement 1 bilden, und unbelichtete Bereiche, welche noch für eine zweite Belichtung zur Bildung des ersten Musters empfindlich sind.

In der Figur 3 erkennt man einen Laser 10, welcher Laserlicht auf den Holographic Recordable Film 5 strahlt. Hinter dem Holographic Recordable Film 5 ist ein Holographie-Master 11 angeordnet. Das Laserlicht wird von dem Holographie-Master 11 gebeugt bzw. reflektiert und interferiert mit dem einfallenden Laserlicht, wodurch das Hologramm in dem Holographic Recordable Film 5 gespeichert wird, jedoch nur in Bereichen, die nicht zuvor belichtet worden sind. So entsteht außerhalb der Fehlstellen das erste Muster 2. Vergleichsbeispiel:
Herstellung eines Sicherheitselementes mit holographischem zweiten Muster

In der Figur 4 erkennt man einen Aufbau analog jenem der Figur 3, wobei jedoch in den Strahlengang des Laserlichtes ein Spatial Light Modulator 8 eingeführt ist. Mit diesem Aufbau wird die erste Belichtung analog dem Beispiel 2 ausgeführt, wobei der wesentliche Unterschied darin besteht, dass die gebildeten Fehlstellen in dieser Variante holographische Fehlstellen sind. Ansonsten erfolgt dann die zweite Belichtung, wie in Beispiel 2 beschrieben.

## Patentansprüche

1. Verfahren zur Herstellung eines Sicherheitselementes für ein Sicherheits- und/oder Wertdokument,
mit einem Holographic Recordable Film,
in welchem ein flächiges erstes Muster in Form eines ersten Hologramms gebildet ist,
wobei in dem ersten Muster Teilbereiche gebildet sind, in welchen das erste Muster unterbrochen ist und welche ein zweites und von dem ersten Muster verschiedenes Muster bilden,
mit den folgenden Verfahrensschritten:
a) eine Information wird in eine Zeichenfolge transformiert,
b) die Zeichenfolge aus Stufe a) wird in das zweite Muster, nämlich einen Barcode, transformiert,
c) das Muster aus Stufe b) wird in ein Modulatorsignal für einen Spatial Light Modulator transformiert,
d) der Holographic Recordable Film wird unter Zwischenschaltung eines mit dem Signal aus Stufe c) modulierten Spatial Light Modulators in Teilbereichen belichtet, wobei das zweite Muster durch belichtete Teilbereiche des Holographic Recordable Films gebildet wird, wobei durch die Belichtung der Holographic Recordable Films photochemisch irreversibel verändert wird, so dass Fehlstellen für folgende Belichtungen entstehen,
e) der belichtete Holographic Recordable Film aus Stufe d) wird der Belichtung über einen Holographie-Master unterworfen, wobei das erste Muster in Bereichen außerhalb der belichteten Teilbereiche des zweiten Musters gebildet wird.

2. Verfahren nach Anspruch 1, wobei in Stufe d) die Belichtung über einen vorzugsweise hinter dem Holographic Recordable Film, bezogen auf eine Strahlungsquelle für Belichtungslicht, angeordneten Spiegel erfolgt.

3. Verfahren nach Anspruch 1 oder 2, wobei das erste Muster ein Wappen, Siegel oder Hoheitszeichen ist.

4. Sicherheits- und/oder Wertdokument mit einem Sicherheitselement hergestellt nach einem der Ansprüche 1 bis 3.

## Claims

1. A method for manufacturing a security element for a security and/or value document,
comprising a Holographic Recordable Film,
in which a sheet-like first pattern in the form of a first hologram is formed,
wherein in the first pattern partial regions are formed, in which the first pattern is interrupted and which form a second pattern different from the first pattern,
comprising the following steps:
a) an information is transformed into a sequence of characters,
b) the sequence of characters from step a) is transformed into the second pattern, namely a barcode,
c) the pattern from step b) is transformed into a modulator signal for a Spatial Light Modulator,
d) the Holographic Recordable Film is exposed, in partial regions, with the interposition of a Spatial Light Modulator modulated with the signal from step c), wherein the second pattern is formed by exposed partial regions of the Holographic Recordable Film, wherein by the exposure the Holographic Recordable Films is photochemically irreversibly modified, so that voids for subsequent exposures are created,
e) the exposed Holographic Recordable Film from step d) is subjected to the exposure through a holographic master, wherein the first pattern is formed in regions outside of the exposed partial regions of the second pattern.

2. The method of claim 1, wherein in step d) the exposure occurs through a mirror preferably arranged behind the Holographic Recordable Film, referred to a radiation source for exposure light.

3. The method of claim 1 or 2, wherein the first pattern is an escutcheon, a seal, or a national emblem.

4. A security and/or value document comprising a security element made according to one of claims 1 to 3.

## Revendications

1. Procédé de fabrication d'un élément de sécurité pour un document de sécurité et/ou de valeur, comprenant un Holographic Recordable Film,
dans lequel un premier motif plan en forme d'un premier hologramme est réalisé,
dans lequel dans le premier motif des zones partielles sont réalisées, dans lesquelles le premier motif est interrompu et qui forment un deuxième motif différent du premier motif,
comprenant les étapes suivantes:
a) une information est transformée en une séquence de caractères,
b) la séquence de caractères de l'étape a) est transformée en le deuxième motif, c'est-à-dire un code à barres,
c) le motif de l'étape b) est transformé en un signal de modulation pour un Spatial Light Modulator,
d) l'Holographic Recordable Film est exposé, dans des zones partielles, avec interposition d'un Spatial Light Modulator modulé avec le signal de l'étape c), dans lequel le deuxième motif est généré par des zones partielles exposées du Holographic Recordable Film, dans lequel par l'exposition l'Holographic Recordable Films est photochimiquement modifié de façon irréversible, de façon que des imperfections pour des expositions ultérieures soient créées,
e) l'Holographic Recordable Film exposé de l'étape d) est soumis à l'exposition par l'intermédiaire d'un master holographique, dans lequel le premier motif est généré dans des zones à l'extérieur des zones partielles exposées du deuxième motif.

2. Procédé selon la revendication 1, dans lequel dans l'étape d) l'exposition a lieu par l'intermédiaire d'un miroir de préférence disposé derrière l'Holographic Recordable Film, par rapport à une source de rayonnement pour lumière d'exposition.

3. Procédé selon la revendication 1 ou 2, dans lequel le premier motif est un blason, un sceau ou un emblème national.

4. Document de sécurité et/ou de valeur comprenant un élément de sécurité fabriqué selon une des revendications 1 à 3.
